# FASCICULE DE BREVET EUROPEEN

(11) **EP 2 147 777 B1**
(45) Date de publication et mention de la délivrance du brevet: **22.09.2010**
(21) Numéro de dépôt: 08300245.1
(22) Date de dépôt: 25.07.2008
(51) Int. Cl.: B29C 70/30, B64C 1/12

(54) **Cale d'épaisseur avec patte d'accroche.**
Unterlagsscheibe mit Befestigungshaken
Shim with latching tab.

(43) Date de publication de la demande: 27.01.2010
(73) Titulaire: Gastel, Daniel André, 78370 Plaisir les Gatines (FR)
(72) Inventeur: Gastel, Daniel André, 78370 Plaisir les Gatines (FR)
(74) Mandataire: Thinat, Michel

(56) Documents cités:
- WO-A-03/039851
- GB-A- 2 378 995

## Description

L'invention concerne en général les cales d'épaisseur.

Plus précisément, l'invention concerne, selon un premier aspect, un produit stratifié présentant une épaisseur réglable par délitage, ce produit comprenant un empilement de feuilles présentant chacune une résistance intrinsèque au déchirement, et adhérant l'une à l'autre par une force de liaison plus faible que la résistance des feuilles au déchirement, ce dont il résulte que chaque feuille peut être détachée de l'empilement sans se déchirer.

Des produits de ce type sont enseignés dans le brevet d'invention FR2831095B1, et sont notamment utilisés comme cales de réglage pour des ensembles mécaniques. Ces ensembles mécaniques présentent généralement des jeux importants en certains points, résultant de la combinaison des tolérances de fabrication. Ces jeux sont compensés en insérant des cales.

L'épaisseur de ces cales est ajustée en retiranto les feuilles avant ou arrières une à une, jusqu'à ce que l'épaisseur recherchée soit atteinte.

Ces cales sont notamment utilisées dans des industries où aucune perte de cale dans l'ensemble mécanique n'est tolérable, pour des raisons de sécurité ou d'assurance qualité. C'est le cas par exemple des mâts d'accrochage de moteurs d'avions dans l'industrie aéronautique. Pour résorber le jeu entre deux pièces, on insère une cale entre elles avant de les serrer. Lorsque les pièces à caler ont des surfaces en regard l'une de l'autre qui ne sont pas horizontale, il est utile de faciliter une tenue en place de la cale jusqu'au serrage en cas de montage ou après desserrage en cas de démontage.

On connaît dans l'aéronautique des moyens pour retenir une cale jusqu'au montage final. Par exemple, le document WO2007/068949 enseigne de mettre un ruban adhésif sur la cale d'épaisseur qui est ensuite enlevé. Cette solution convient pour des carénages d'ailes d'avion. Cependant dans d'autres parties de l'avion, la surépaisseur du ruban adhésif ou sa tenue en température ne conviennent pas. Pour enlever le ruban adhésif, il est nécessaire d'enlever la cale et il existe alors une plage temporelle dans laquelle la cale risque de tomber avant serrage définitif des pièces.

Dans d'autres domaines technologiques tels que le bâtiment, le document EP0362749 divulgue une cale retenue à la verticale à partir du sommet d'un châssis de fenêtre par une fixation angulaire réalisée d'une seule pièce avec la cale. Ce type de réalisation convient dans le domaine du bâtiment où on rencontre essentiellement deux types de surfaces, les surfaces verticales et les surfaces horizontales. Il ne convient pas dans le domaine de la mécanique de précision où on peut rencontrer un large éventail de surfaces obliques entre l'horizontale et la verticale. Le matériau de la cale de l'art antérieur est approprié pour subir une déformation plastique au pliage de façon à réaliser la fixation angulaire mais un matériau stratifié est mieux approprié pour des tolérances de calage très précises. Malheureusement, les matériaux stratifiés pose le problème de résistance au pliage qui conduit à une rupture si on dépasse les limites élastiques car on n'entre pas dans le domaine de déformation plastique.

Pour remédier aux problèmes posés par l'état antérieur de la technique, l'invention a pour objet une cale d'épaisseur comprenant plusieurs feuilles de matériau tissé imprégné d'une première résine qui lui confère une cohésion entre feuilles et un maintien rigide d'une première face avant dans un plan, et comprenant sur une extrémité de ladite première face avant, une patte rapportée qui sort du plan de ladite première face avant.

Selon un premier mode de réalisation, la patte comprend une deuxième face avant dont une première extrémité est coplanaire avec la première face avant et dont une deuxième extrémité opposée à la première extrémité, sort du plan de ladite première face avant.

Selon un deuxième mode de réalisation, pris seul ou en combinaison avec le premier mode de réalisation, la patte comprend une deuxième face avant dont une première extrémité est coplanaire avec la première face avant et dont une deuxième extrémité opposée à la première extrémité, est courbée.

De préférence, la patte est en acier inoxydable.

Avantageusement, la patte est fixée sur la cale d'épaisseur au moyen d'un liant organique comprenant une deuxième résine de même nature que la première résine.

De préférence, la patte est fixée sur la cale d'épaisseur au moyen d'un liant organique comprenant une deuxième résine de type époxyde.

Particulièrement, la patte est fixée sur la cale d'épaisseur au moyen d'un liant organique comprenant une deuxième résine dans des proportions variant de 47% à 58% et comprenant un durcisseur dans des proportions variant de 42% à 53%.

L'invention a aussi pour objet un procédé de calage d'une deuxième pièce comportant une deuxième surface non horizontale sur une première pièce comportant une première surface non horizontale, comprenant des étapes consistant à :
- prendre une cale d'épaisseur comprenant plusieurs feuilles de matériau tissé imprégné d'une première résine qui lui confère une cohésion entre feuilles et un maintien rigide d'une première face avant dans un plan, et comprenant sur une extrémité de ladite première face avant, une patte qui sort du plan de ladite première face avant ;
- arracher successivement une ou plusieurs feuilles sur une face arrière jusqu'à obtenir une épaisseur de cale qui convient au calage ;
- placer la cale d'épaisseur sur la première surface de façon à ce que la patte maintienne la cale d'épaisseur (10) sur la première pièce ;
- approcher la deuxième pièce de la première pièce contre la cale d'épaisseur.

L'invention a encore pour objet, un procédé de fabrication d'une cale d'épaisseur pour caler une deuxième pièce comportant une deuxième surface non horizontale sur une première pièce comportant une première surface non horizontale, comprenant des étapes dans lesquelles :
- on prend une cale d'épaisseur comprenant plusieurs feuilles de matériau tissé imprégné d'une première résine qui lui confère une cohésion entre feuilles et un maintien rigide d'une première face avant dans un plan ;
- on place une patte d'accrochage sur la cale d'épaisseur.

Plus précisément, pour placer la patte d'accrochage sur la cale d'épaisseur :
- on arrache une ou plusieurs feuilles sur une longueur prédéterminée de façon à produire un lamage sur une extrémité de ladite première face avant ;
- on place dans le lamage produit, une patte qui sort du plan de ladite première face avant.

Particulièrement, on arrache une ou plusieurs feuilles jusqu'à obtenir une profondeur de lamage égale à une épaisseur de la patte de façon à rendre une première extrémité de la patte coplanaire avec la première face avant et à faire sortir du plan de ladite première face avant, une deuxième extrémité opposée à la première extrémité.

De préférence, la patte qui est utilisée, est en acier inoxydable.

Plus particulièrement, la patte qui est utilisée, comprend une deuxième face avant dont une première extrémité est plane et dont une deuxième extrémité opposée à la première extrémité, est courbée.

Avantageusement, on fixe la patte sur la cale d'épaisseur au moyen d'un liant organique comprenant une deuxième résine de même nature que la première résine.

De préférence, on fixe la patte sur la cale d'épaisseur au moyen d'un liant organique comprenant une deuxième résine de type époxyde.

Plus précisément, le procédé de fabrication comprend des étapes dans lesquelles :
- on enduit le fond du lamage produit avec un liant organique comprenant une deuxième résine dans des proportions variant de 45% à 55%, un durcisseur dans des proportions variant de 40% à 50% et un solvant dans des proportions variant de 3% à 7% ; et
- on maintient la patte sous pression au fond du lamage pendant le temps nécessaire au durcissement de ladite deuxième résine.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective éclatée d'un produit stratifié à partir duquel est réalisée l'invention,
- les figures 2 à 4 sont des vues qui montrent les interactions de différentes étapes de procédé sur le produit de la figure 1 pour obtenir une cale conforme à l'invention,
- la figure 5 montre un exemple d'utilisation d'une cale conforme à l'invention.

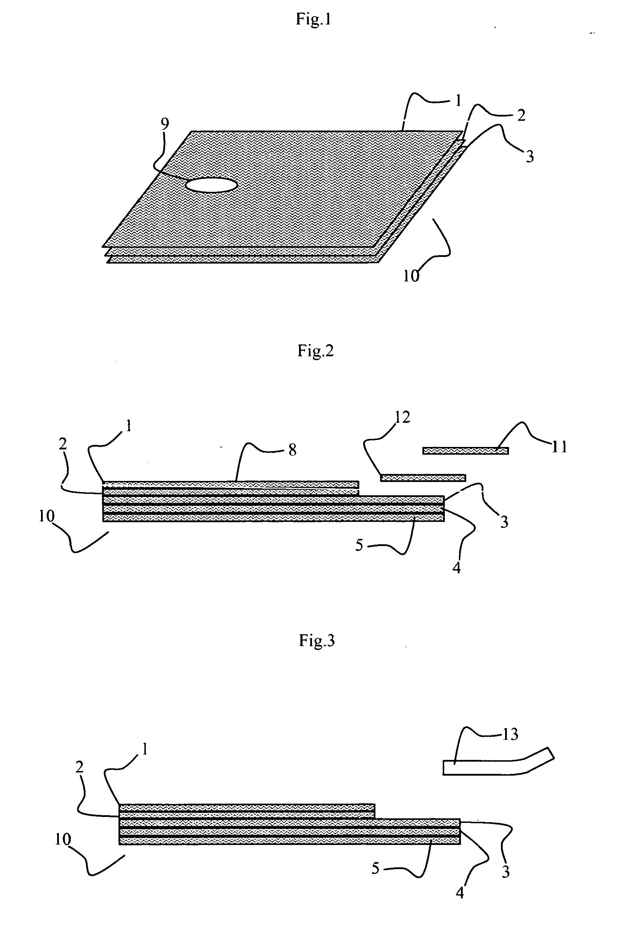

En référence à la figure 1, une cale d'épaisseur 10 comprend plusieurs feuilles 1, 2, 3, par exemple sur le modèle de la structure présentée dans le brevet FR2831095B1 ou dans le brevet FR2854098B1. Ici seulement trois feuilles sont représentées à titre purement illustratif mais on comprendra aisément que la quantité de feuilles superposées, est généralement nettement supérieure à trois. On rappelle que les feuilles sont en tissu de verre, de carbone, d'aramide, de céramique ou d'autres fibres sélectionnées pour leur qualité de résistance à la compression en vue de garantir une épaisseur constante de feuille, et pour leur qualité de résistance à la traction en vue de garantir une résistance élevée au déchirement.

On rappelle encore que les feuilles sont enduites d'une résine dont une polymérisation finale en maintenant les feuilles serrées les unes contre les autres, de façon à procurer au moins deux effets techniques majeurs. Un premier effet est de maintenir les feuilles liées entre elles avec une force d'adhérence suffisamment élevée pour assurer une cohésion suffisante du produit stratifié et suffisamment basse pour permettre un arrachement volontaire de feuilles une à une sans déchirement, en d'autres termes un maintien ou un arrachement de chaque feuille dans son intégralité. Un deuxième effet est d'offrir une haute résistance au cisaillement entre feuilles. Cette haute résistance au cisaillement, en s'opposant aux glissement des feuilles les unes sur les autres, en combinaison avec les qualités de résistance à la traction des fibres, empêche le cintrage (bending en anglais) du produit stratifié en vue de garantir une planéité parfaite.

Le premier effet technique est primordial dans les applications de calage de haute précision car l'arrachage de chaque feuille garantit une diminution d'épaisseur égale à l'épaisseur d'une feuille. Un nombre initial de feuilles donnant une épaisseur initiale connue, un nombre final de feuilles donne une épaisseur finale qu'il est possible de déterminer avec précision.

Le deuxième effet technique est tout aussi primordial que le premier car on conçoit aisément qu'un cintrage simple ou multiple provoquerait des écarts entre les sommets des courbes qui iraient au-delà de l'épaisseur obtenue par accumulation des épaisseurs de feuilles.

Cependant le maintien rigide d'une face de la cale d'épaisseur dans un plan, indispensable pour le calage de pièces à surfaces de contact planes, a pour contre partie de ne pas permettre un pliage par déformation plastique en vue de créer une patte d'accroche. Lorsqu'on détache la feuille 1 de la face avant, il devient possible de cintrer individuellement la partie détachée de cette feuille car elle n'est plus retenue en glissement par une autre feuille. Cependant le cintrage obtenu est une déformation élastique qui ne permet pas une fonction d'accrochage comme le permettrait une déformation plastique. La nature des fibres rend impossible un pliage comparable à celui qu'il est possible d'obtenir avec une cale d'épaisseur réalisée en acier comme c'est par exemple le cas des cales constituées de feuilles d'acier inoxydable de type AISI 304 qui sont utilisées pour caler des pièces en acier. Cependant les cales en acier présentent des inconvénients de poids que ne présentent pas les cales en matériaux composites, plus légers par nature.

On note sur la figure 1, un perçage circulaire 9 dans la cale 10 dont la fonction essentielle est de permettre un passage de vis de fixation entre les pièces à serrer. Le perçage circulaire 9 est adapté pour une fixation finale de la cale 10 lorsque les pièces à caler sont assemblées mais il n'est mal adapté pour un maintien de la cale 10 avant que les pièces à caler ne soient assemblées.

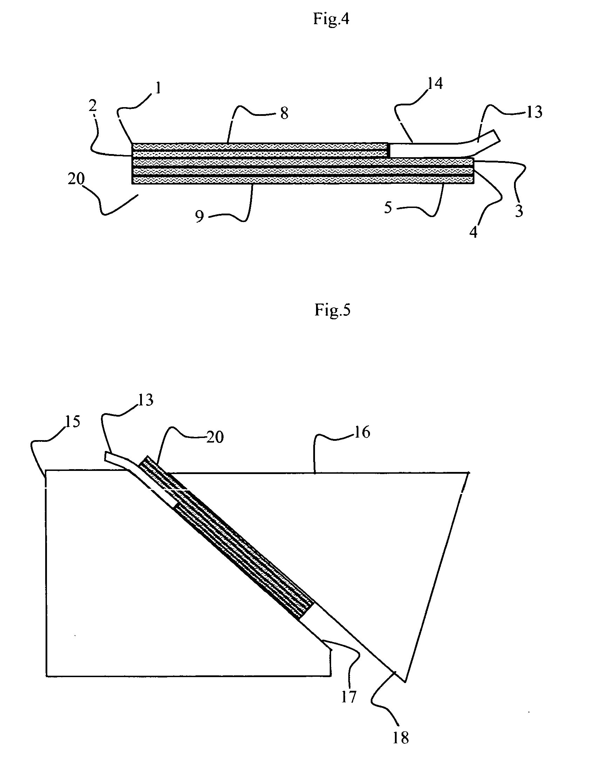

On explique à présent en référence aux figures 2 à 4, un procédé de fabrication d'une cale d'épaisseur 20 pour caler une deuxième pièce 16 comportant une deuxième surface 18 non horizontale sur une première pièce 15 comportant une première surface 17 non horizontale, telles que représentées en figure 5.

Dans une première étape en référence à la figure 2, on prend une cale d'épaisseur 10 comprenant plusieurs feuilles 1, 2, 3, 4, 5 de matériau tissé imprégné d'une première résine qui lui confère une cohésion entre feuilles et un maintien rigide d'une première face avant 8 dans un plan. L'épaisseur initiale de la cale d'épaisseur 10 est typiquement de l'ordre de 1 mm.

Dans une deuxième étape, on arrache une feuille 1 sur une partie seulement de sa longueur. Cette longueur est prédéterminée de façon à produire un lamage sur une extrémité de la face avant 8 qui est utile pour les étapes suivantes. Pendant cette phase préliminaire de pelage de la cale, le rayon de courbure de la feuille qu'on arrache, est suffisamment grand pour que la souplesse des fibres en cintrage et leur résistance élastique à la traction, empêchent la feuille de se déchirer. Pour s'assurer que la feuille 1 et chacune des feuilles suivantes en tant que de besoin, ne soient pas arrachées au-delà de la longueur prédéterminée, on peut par exemple appliquer une règle, non représentée, en pression sur la face avant 8. On plie la partie 11 arrachée de la feuille 1 perpendiculairement au plan de la face avant 8. Ce pliage perpendiculaire provoque une cassure des fibres au niveau de la règle qui permet de détacher la partie 11 en conservant le reste de la feuille 1 adhérente à la cale d'épaisseur 10. Cette cassure est facilitée par la nature des fibres qui résistent bien aux contraintes en compression et en traction mais qui résistent mal aux contraintes en torsion et en cintrage à faible rayon de courbure à cause de leur dureté. On procède de même pour la feuille 2 de façon à détacher une partie 12 puis pour chaque feuille suivante si nécessaire jusqu'à obtenir une profondeur du lamage utile pour les étapes suivantes.

Dans une troisième étape, on enduit le fond et éventuellement les bords du lamage produit dans l'étape précédente avec un liant organique à l'état liquide. De nombreux essais combinant raisonnement et tâtonnements, ont été réalisés. Parmi ces essais, ceux permettant d'obtenir les meilleurs résultats dans les étapes suivantes sont ceux utilisant un liant organique comprenant une résine dans des proportions variant de 45% à 55%, un durcisseur dans des proportions variant de 40% à 50% et un solvant dans des proportions variant de 3% à 7%. L'exploitation des mesures obtenues expérimentalement, ont mis en évidence l'existence statistique d'un optimum de tenue lorsqu'on se rapprochait d'une composition de liant organique comprenant 50% de résine, 45% de durcisseur et 5% de solvant.

La résine utilisée est avantageusement la même que celle qui enrobe originellement les fibres des feuilles tissées 1, 2, 3, 4, 5, ... de façon à faire corps avec elle. On préfère dans la mesure du possible, une résine de type époxyde pour laquelle on utilise comme durcisseur, un agent de réticulation de type anhydride d'acide, phénol ou amine. Le liant organique est ainsi thermodurcissable à température ambiante en généralement moins de trois heures.

Dans une quatrième étape en référence à la figure 3, on place dans le lamage produit et enduit au cours des étapes précédentes, une patte 13 qui sort du plan de la face avant 8. Une utilisation de patte 13 en acier inoxydable est particulièrement intéressante car elle permet de former la patte 13 à façon, notamment en termes de pliage, pour l'adapter au mieux aux fonctions d'accrochage qu'on prévoit de lui faire remplir. On sélectionne de préférence une nuance d'acier parmi celles en usage dans le domaine mécanique où la cale d'épaisseur sera utilisée. Par exemple, dans le domaine aéronautique, on retient une nuance désignée AISI 304 ou Z6CN1810 en fonction du type de norme considérée.

Le matériau qui compose la patte 13 est, de part son aptitude aux déformations plastiques, différent de celui de la cale d'épaisseur 10 d'origine. D'autres matériaux que l'acier peuvent convenir à condition d'offrir une bonne tenue en température, notamment pour des utilisations à proximité de moteurs.

Ce deuxième matériau permet d'obtenir une patte 13 d'accrochage qui comprend une face avant 14 dont une première extrémité est plane et dont une deuxième extrémité opposée à la première extrémité, est courbée.

La profondeur utile du lamage produit dans la deuxième étape est égale à l'épaisseur de la patte 13 de façon à rendre la première extrémité de la patte 13 coplanaire avec la face avant 8 et à faire sortir du plan de la face avant 8, une deuxième extrémité opposée à la première extrémité. La deuxième extrémité peut être obtenue par pliage ou cintrage de la patte 13 ou par surépaisseur après rectification de la première extrémité. Ainsi pour une épaisseur de patte égale à 0,2mm et une largeur de patte égale à 10 mm, la profondeur et la largeur du lamage sont respectivement de 0,2 mm et de 10 mm. L'épaisseur de la patte est suffisamment faible pour laisser la plus grande marge de manoeuvre possible de réglage d'épaisseur de la cale. Ainsi, on évite de créer une surépaisseur en saillie qui rendrait inopérante la fonction de précision pour la cale de réglage. La longueur du lamage peut varier quant à elle d'une valeur minimale à une valeur maximale. La valeur minimale résulte généralement d'essais effectués pour déterminer et contrôler une surface de collage, longueur fois largeur, qui garantit une bonne tenue de la patte 13 sur la cale 10. La valeur maximale peut quant à elle atteindre la longueur totale initiale de la cale 10 auquel cas on ne parle plus de lamage. Il n'est alors pas nécessaire d'arracher une partie ou plus exactement la totalité de quelques feuilles pour positionner la patte 13 qui peut couvrir dans ce cas la totalité de la face supérieure 8. D'autres considérations peuvent intervenir pour limiter la valeur maximale, par exemple en termes de poids ou de conductivité électrique lorsque la patte est métallique.

Dans une cinquième étape, on maintient la patte sous pression au fond du lamage pendant le temps nécessaire au durcissement de la résine qui constitue le liant organique. Après durcissement, le liant qui se confond pratiquement avec la première résine d'enduction des feuilles, comprend typiquement de 47% à 58% de résine et de 42% à 53% de durcisseur.

A la fin du procédé de fabrication, on obtient une cale d'épaisseur 20 avec patte 13 d'accrochage rapportée.

En référence à la figure 4, la cale d'épaisseur 20 comprend le nombre initial de feuilles 1, 2,..., 3, ... avec quelques feuilles 1, 2,... légèrement écourtées sur sa face avant 8. Le reste des feuilles 3, ..., 4, 5, dans leur intégralité jusqu'à la dernière feuille 5 sur la face arrière 9.

On explique à présent une utilisation de la cale 20 dans un procédé de calage d'une pièce 16 comportant une surface 18 non horizontale sur une pièce 15 comportant elle aussi une surface 17 non horizontale.

On prend la cale d'épaisseur 20 qui comprend sur sa face avant 8, la patte 13 qui sort du plan en extrémité de la face avant. La patte 13 a une épaisseur qui correspond à la profondeur du lamage déterminée par le nombre de feuilles 1, 2, dont on avait enlevé une partie 11, 12. De la sorte, la patte 13 comprend partie de sa face avant 14 qui est coplanaire avec la face avant 8 de la cale 20, de façon à reproduire l'intégralité de l'épaisseur d'une cale 10 standard.

On arrache successivement une ou plusieurs feuilles 5, 4, 3 sur une face arrière 9, opposée à la face avant 8 où se trouve la patte d'accrochage, jusqu'à obtenir une épaisseur de cale qui convient au calage.

En référence à la figure 5, on place la cale d'épaisseur 20 sur la surface 17 de la pièce 15 de façon à ce que la patte 13 maintienne la cale d'épaisseur 20 sur la première pièce 15, ici par accrochage sur la face supérieure de la pièce 15. Une perte de la cale dans la structure mécanique à monter serait fort ennuyeuse, particulièrement lorsque la structure mécanique comprend un mât d'accrochage de moteur sur une aile d'avion. La patte d'accrochage évite à la cale 20 de glisser le long de la surface 17 et de tomber dans les tréfonds de la structure mécanique. Ce qui es

On approche ensuite la pièce 16 de la première pièce 15 contre la cale d'épaisseur 20.

## Revendications

1. Cale d'épaisseur (20) comprenant plusieurs feuilles (1, 2, 3, 4, 5) de matériau tissé imprégné d'une première résine qui lui confère une cohésion entre feuilles et un maintien rigide d'une première face avant (8) dans un plan, et comprenant sur une extrémité de ladite première face avant, une patte d'accroche (13) rapportée qui sort du plan de ladite première face avant.

2. Cale d'épaisseur selon la revendication 1, **caractérisée en ce que** la patte (13) comprend une deuxième face avant (14) dont une première extrémité est coplanaire avec la première face avant (8) et dont une deuxième extrémité opposée à la première extrémité, sort du plan de ladite première face avant.

3. Cale d'épaisseur selon l'une des revendications précédentes, **caractérisée en ce que** la patte (13) comprend une deuxième face avant (14) dont une première extrémité est coplanaire avec la première face avant (8) et dont une deuxième extrémité opposée à la première extrémité, est courbée.

4. Cale d'épaisseur selon l'une des revendications précédentes, **caractérisée en ce que** la patte (13) est en acier inoxydable.

5. Cale d'épaisseur selon l'une des revendications précédentes, **caractérisée en ce que** la patte (13) est fixée sur la cale d'épaisseur au moyen d'un liant organique comprenant une deuxième résine de même nature que la première résine.

6. Cale d'épaisseur selon l'une des revendications précédentes, **caractérisée en ce que** la patte (13) est fixée sur la cale d'épaisseur au moyen d'un liant organique comprenant une deuxième résine de type époxyde.

7. Cale d'épaisseur selon l'une des revendications précédentes, **caractérisée en ce que** la patte (13) est fixée sur la cale d'épaisseur au moyen d'un liant organique comprenant une deuxième résine dans des proportions variant de 47% à 58% et comprenant un durcisseur dans des proportions variant de 42% à 53%.

8. Procédé de calage d'une deuxième pièce (16) comportant une deuxième surface (18) non horizontale sur une première pièce (15) comportant une première surface (17) non horizontale, comprenant des étapes consistant à :
- prendre une cale d'épaisseur (20) comprenant plusieurs feuilles (1, 2, 3, 4, 5) de matériau tissé imprégné d'une première résine qui lui confère une cohésion entre feuilles et un maintien rigide d'une première face avant (8) dans un plan, comprenant sur une extrémité de ladite première face avant, une patte d'accroche (13) qui sort du plan de ladite première face avant ;
- arracher successivement une ou plusieurs feuilles (5, 4, 3) sur une face arrière (9) jusqu'à obtenir une épaisseur de cale qui convient au calage ;
- placer la cale d'épaisseur (20) sur la première surface (17) de façon à ce que la patte (13) maintienne la cale d'épaisseur (20) sur la première pièce (15) ;
- approcher la deuxième pièce (16) de la première pièce (15) contre la cale d'épaisseur (20).

9. Procédé de fabrication d'une cale d'épaisseur (20) pour caler une deuxième pièce (16) comportant une deuxième surface (18) non horizontale sur une première pièce (15) comportant une première surface (17) non horizontale, comprenant des étapes dans lesquelles :
- on prend une cale d'épaisseur (10) comprenant plusieurs feuilles (1, 2, 3, 4, 5) de matériau tissé imprégné d'une première résine qui lui confère une cohésion entre feuilles et un maintien rigide d'une première face avant (8) dans un plan ;
- on place sur la cale d'épaisseur (10), une patte d'accroche (13) qui sort du plan de ladite première face avant.

10. Procédé de fabrication selon la revendication 9, **caractérisée en ce que** pour placer la patte (13) sur la cale d'épaisseur (10) :
- on arrache une ou plusieurs feuilles (1, 2) sur une longueur prédéterminée de façon à produire un lamage sur une extrémité de ladite première face avant ;
- on place dans le lamage produit, une patte (13) qui sort du plan de ladite première face avant.

11. Procédé de fabrication selon la revendication 9 ou 10, **caractérisée en ce qu'**on arrache une ou plusieurs feuilles jusqu'à obtenir une profondeur de lamage égale à une épaisseur de la patte (13) de façon à rendre une première extrémité de la patte (13) coplanaire avec la première face avant (8) et à faire sortir du plan de ladite première face avant, une deuxième extrémité opposée à la première extrémité.

12. Procédé de fabrication selon l'une des revendications 9 à 11, **caractérisée en ce que** la patte (13) qui est utilisée, est en acier inoxydable.

13. Procédé de fabrication selon l'une des revendications 9 à 12, **caractérisée en ce que** la patte (13) qui est utilisée, comprend une deuxième face avant (14) dont une première extrémité est plane et dont une deuxième extrémité opposée à la première extrémité, est courbée.

14. Procédé de fabrication selon l'une des revendications 9 à 13, **caractérisée en ce qu'**on fixe la patte (13) sur la cale d'épaisseur au moyen d'un liant organique comprenant une deuxième résine de même nature que la première résine.

15. Procédé de fabrication selon l'une des revendications 9 à 14, **caractérisée en ce qu'**on fixe la patte (13) sur la cale d'épaisseur au moyen d'un liant organique comprenant une deuxième résine de type époxyde.

16. Procédé de fabrication selon l'une des revendications 9 à 15, comprenant des étapes dans lesquelles :
- on enduit le fond du lamage produit avec un liant organique comprenant une deuxième résine dans des proportions variant de 45% à 55%, un durcisseur dans des proportions variant de 40% à 50% et un solvant dans des proportions variant de 3% à 7% ;
- on maintient la patte sous pression au fond du lamage pendant le temps nécessaire au durcissement de ladite deuxième résine.

## Claims

1. Shim (20) comprising a plurality of sheets (1, 2, 3, 4, 5) of woven material impregnated with a first resin which confers thereon cohesion between the sheets and rigid holding of a first front face (8) in a plane, and comprising on one end of said first front face an attached latching tab (13) which projects from the plane of said first front face.

2. Shim according to claim 1, **characterised in that** the tab (13) comprises a second front face (14), a first end of which is coplanar with the first front face (8) and a second end of which, opposite the first end, projects from the plane of said first front face.

3. Shim according to one of the preceding claims, **characterised in that** the tab (13) comprises a second front face (14), a first end of which is coplanar with the first front face (8) and a second end of which, opposite the first end, is curved.

4. Shim according to one of the preceding claims, **characterised in that** the tab (13) is made from stainless steel.

5. Shim according to one of the preceding claims, **characterised in that** the tab (13) is fixed to the shim by means of an organic binder comprising a second resin of the same nature as the first resin.

6. Shim according to one of the preceding claims, **characterised in that** the tab (13) is fixed to the shim by means of an organic binder comprising a second resin of the epoxy type.

7. Shim according to one of the preceding claims, **characterised in that** the tab (13) is fixed to the shim by means of an organic binder comprising a second resin in proportions varying from 47% to 58% and comprising a hardener in proportions varying from 42% to 53%.

8. Method for shimming a second part (16) comprising a non-horizontal second surface (18) onto a first part (15) comprising a non-horizontal first surface (17), comprising steps which consist of:
- taking a shim (20) comprising a plurality of sheets (1, 2, 3, 4, 5) of woven material impregnated with a first resin which confers thereon cohesion between the sheets and rigid holding of a first front face (8) in a plane, comprising on one end of said first front face a latching tab (13) which projects from the plane of said first front face;
- successively tearing off one or more sheets (5, 4, 3) on a rear face (9) until a shim thickness suitable for the shimming operation is obtained;
- placing the shim (20) on the first surface (17) so that the tab (13) holds the shim (20) on the first part (15);
- moving the second part (16) towards the first part (15) against the shim (20).

9. Method for producing a shim (20) for shimming a second part (16) comprising a non-horizontal second surface (18) onto a first part (15) comprising a non-horizontal first surface (17), comprising steps in which:
- a shim (10) is taken which comprises a plurality of sheets (1, 2, 3, 4, 5) of woven material impregnated with a first resin which confers thereon cohesion between the sheets and rigid holding of a first front face (8) in a plane;
- there is placed on the shim (10) a latching tab (13) which projects from the plane of said first front face.

10. Production method according to claim 9, **characterised in that**, in order to place the tab (13) on the shim (10):
- one or more sheets (1, 2) are torn off along a predetermined length so as to produce a recess on one end of said first front face;
- there is placed into the recess produced a tab (13) which projects from the plane of said first front face.

11. Production method according to claim 9 or 10, **characterised in that** one or more sheets are torn off until a recess depth equal to a thickness of the tab (13) is obtained, so as to make a first end of the tab (13) coplanar with the first front face (8) and so as to make a second end, opposite the first end, project from the plane of said first front face.

12. Production method according to one of claims 9 to 11, **characterised in that** the tab (13) which is used is made from stainless steel.

13. Production method according to one of claims 9 to 12, **characterised in that** the tab (13) which is used comprises a second front face (14), a first end of which is flat and a second end of which, opposite the first end, is curved.

14. Production method according to one of claims 9 to 13, **characterised in that** the tab (13) is fixed to the shim by means of an organic binder comprising a second resin of the same nature as the first resin.AZ

15. Production method according to one of claims 9 to 14, **characterised in that** the tab (13) is fixed to the shim by means of an organic binder comprising a second resin of the epoxy type.

16. Production method according to one of claims 9 to 15, comprising steps in which:
- the bottom of the recess produced is coated with an organic binder comprising a second resin in proportions varying from 45% to 55%, a hardener in proportions varying from 40% to 50% and a solvent in proportions varying from 3% to 7%;
- the tab is held under pressure at the bottom of the recess for the time necessary for the hardening of said second resin.

## Patentansprüche

1. Unterlagsscheibe (20), umfassend mehrere Blätter (1, 2, 3, 4, 5) aus gewebtem Material, imprägniert mit einem ersten Harz, das ihr eine Kohäsion zwischen den Blättern und eine Abstützung einer ersten Vorderseite (8) auf einer Ebene verleiht, und umfassend auf einem Ende der ersten Vorderseite, einen hinzugefügten Befestigungshaken (13), der aus der Ebene der ersten Vorderseite herausragt.

2. Unterlagsscheibe nach Anspruch 1, **dadurch gekennzeichnet, dass** der Haken (13) eine zweite Vorderseite (14) umfasst, deren erstes Ende auf der gleichen Ebene liegt wie die erste Vorderseite (8), und deren zweites Ende das dem ersten Ende gegenüberliegt, aus der Ebene der ersten Vorderseite herausragt.

3. Unterlagsscheibe nach einem er vorhergehenden Ansprüche, **dadurch gekennzeichnet, dass** der Haken (13) eine zweite Vorderseite (14) umfasst, deren erstes Ende auf der gleichen Ebene liegt wie die erste Vorderseite (8), und deren zweites Ende, das dem ersten Ende gegenüberliegt, gekrümmt ist.

4. Unterlagsscheibe nach einem der vorhergehenden Ansprüche, **dadurch gekennzeichnet, dass** der Haken (13) aus rostfreiem Stahl ist.

5. Unterlagsscheibe nach einem der vorhergehenden Ansprüche, **dadurch gekennzeichnet, dass** der Haken (13) auf der Unterlagsscheibe mithilfe eines organischen Bindemittels befestigt ist, umfassend ein zweites Harz der gleichen Art wie das erste Harz.

6. Unterlagsscheibe nach einem der vorhergehenden Ansprüche, **dadurch gekennzeichnet, dass** der Haken (13) auf der Unterlagsscheibe mithilfe eines organischen Bindemittels befestigt ist, umfassend ein zweites Harz des Typs Epoxyd.

7. Unterlagsscheibe nach einem der vorhergehenden Ansprüche, **dadurch gekennzeichnet, dass** der Haken (13) auf der Unterlagsscheibe mithilfe eines organischen Bindemittels befestigt ist, umfassend ein zweites Harz in Mengen, die von 47 % bis 58 % variieren und umfassend ein Härtungsmittel in Mengen, die von 42 % bis 53 % variieren.

8. Verfahren zum Klemmen eines zweiten Teils (16), umfassend eine zweite nicht horizontale Oberfläche (18) auf einen ersten Teil (15), umfassend eine erste, nicht horizontale Fläche (17), enthaltend Schritte, bestehend aus:
- Aufnehmen einer Unterlagsscheibe (20) umfassend mehrere Blätter (1, 2, 3, 4, 5) aus gewebtem Material, imprägniert mit einem ersten Harz, das ihr eine Kohäsion zwischen den Blättern und eine Abstützung einer ersten Vorderseite (8) auf einer Ebene verleiht, umfassend auf einem Ende der ersten Vorderseite einen Befestigungshaken (13), der aus der Ebene der ersten Vorderseite herausragt;
- aufeinander folgendes Herausnehmen von einem oder mehreren Blättern (5, 4, 3) auf einer Hinterseite (9), bis eine Dicke der Unterlagsscheibe erhalten wird, die für das Klemmen geeignet ist;
- Anbringen der Unterlagsscheibe (20) auf der ersten Oberfläche (17), so dass der Haken (13) die Unterlagsscheibe (20) auf dem ersten Teil (15) hält;
- Annähern des zweiten Teils (16) an den ersten Teil (15) gegen die Unterlagsscheibe (20).

9. Verfahren zur Herstellung einer Unterlagsscheibe (20), um einen zweiten Teil (16) zu klemmen, umfassend eine zweite nicht horizontale Oberfläche (18) auf einem ersten Teil (15), umfassend eine erste nicht horizontale Oberfläche (17), enthaltend Schritte, in denen:
- eine Unterlagsscheibe (10) genommen wird, umfassend mehrere Blätter (1, 2, 3, 4, 5) aus gewebtem Material, imprägniert mit einem ersten Harz, das ihr eine Kohäsion zwischen den Blättern und eine Abstützung einer ersten Vorderseite (8) auf einer Ebene verleiht;
- auf der Unterlagsscheibe (10) ein Befestigungshaken (13) angeordnet wird, der aus der Ebene der ersten Vorderseite herausragt.

10. Herstellungsverfahren nach Anspruch 9, **dadurch gekennzeichnet, dass**, um den Haken (13) auf der Unterlagsscheibe (10) anzubringen:
- ein oder mehrere Blätter (1, 2) auf einer vorherbestimmten Länge herausgenommen werden, um eine Plansenkung auf einem Ende der ersten Vorderseite zu erzeugen;
- auf der erzeugen Plansenkung ein Haken (13) angebracht wird, der aus der Ebene der ersten Vorderseite herausragt.

11. Herstellungsverfahren nach Anspruch 9 oder 10, **dadurch gekennzeichnet, dass** eines oder mehrere Blätter herausgenommen werden, bis eine Tiefe der Plansenkung erhalten wird, die gleich der Dicke des Hakens (13) ist, um ein erstes Ende des Hakens (13) auf die gleiche Ebene als die erste Vorderseite (8) zu bringen und aus der Ebene der ersten Vorderseite ein zweites Ende, das dem ersten Ende gegenüberliegt, herausragen zu lassen.

12. Herstellungsverfahren nach einem der Ansprüche 9 bis 11, **dadurch gekennzeichnet, dass** der Haken (13), der verwendet wird, aus rostfreiem Stahl ist.

13. Herstellungsverfahren nach einem der Ansprüche 9 bis 12, **dadurch gekennzeichnet, dass** der Haken (13), der verwendet wird, eine zweite Vorderseite (14) umfasst, von der ein erstes Ende eben ist und von der ein zweites Ende, das dem ersten Ende gegenüber liegt, gekrümmt ist.

14. Herstellungsverfahren nach einem der Ansprüche 9 bis 13, **dadurch gekennzeichnet, dass** der Haken (13) auf der Unterlagsscheibe mithilfe eines organischen Bindemittels befestigt wird, umfassend ein zweites Harz der gleichen Art wie das erste Harz.

15. Herstellungsverfahren nach einem der Ansprüche 9 bis 14, **dadurch gekennzeichnet, dass** der Haken (13) auf der Unterlagsscheibe mithilfe eines organischen Bindemittels befestigt wird, umfassend ein zweites Harz des Typs Epoxyd.

16. Herstellungsverfahren nach einem der Ansprüche 9 bis 15, enthaltend Schritte, in denen:
- auf den Boden der hergestellten Plansenkung ein organisches Bindemittel angebracht wird, umfassend ein zweites Harz in Mengen, die von 45 % bis 55 % variieren, ein Härtungsmittel in Mengen, die von 40 % bis 50 % variieren und ein Lösemittel in Mengen, die von 3 % bis 7 % variieren.
- der Haken während der Zeit, die für die Aushärtung des zweiten Harzes erforderlich ist, unter Druck auf dem Boden der Plansenkung gehalten wird.
